Europäisches Patentamt

European Patent Office

Office européen des brevets

(11) Veröffentlichungsnummer : **0 056 130**
**B1**

# (12) EUROPÄISCHE PATENTSCHRIFT

(45) Veröffentlichungstag der Patentschrift :
05.06.85

(21) Anmeldenummer : 81110518.8

(22) Anmeldetag : 17.12.81

(51) Int. Cl.⁴ : **B 60 C 27/04**, B 60 C 27/16

(54) Gleitschutzvorrichtung für bereifte, insbesondere luftbereifte Fahrzeugräder für Eis- und Schneeflächen.

(30) Priorität : 08.01.81 DE 3100325
14.11.81 DE 3145250
04.12.81 DE 3148112

(43) Veröffentlichungstag der Anmeldung :
21.07.82 Patentblatt 82/29

(45) Bekanntmachung des Hinweises auf die Patenterteilung : 05.06.85 Patentblatt 85/23

(84) Benannte Vertragsstaaten :
BE CH FR GB IT LI NL SE

(56) Entgegenhaltungen :
DE-A- 2 741 662
DE-A- 2 852 235
FR-A- 2 408 472
GB-A- 2 030 939
US-A- 2 510 450
US-A- 2 575 263
US-A- 2 744 558
US-A- 4 120 336

(73) Patentinhaber : Niveau AG
Gartenstrasse 85
CH-4002 Basel (CH)

(72) Erfinder : Preusker, Werner
Kleine-Nister-Strasse 15
D-5239 Atzelgift (DE)

(74) Vertreter : Patentanwälte Dipl.-Ing. J. Richter
Dipl.-Ing. F. Werdermann
Neuer Wall 10
D-2000 Hamburg 36 (DE)

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft eine Gleitschutzvorrichtung für bereifte, insbesondere luftbereifte, Fahrzeugräder für Eis- und Schneeflächen, bestehend aus einer an der Radscheibe oder der Felge eines Fahrzeugrades befestigten Tragscheibe mit einer Anzahl von in gleichem Abstand voneinander radial verlaufenden und um parallel zur Radachse verlaufenden Achsen verschwenkbaren, in ausgeschwenkter Stellung die Reifenlauffläche übergreifenden Gleitschutzarmen, die an ihren die Reifenlauffläche übergreifenden Endabschnitten außenseitig ein Greifprofil oder Gleitschutzstifte tragen (siehe z. B. DE-A-2 852 235).

Für das Fahren mit Kraftfahrzeugen im Winter auf schneebedeckten Steigungen oder Gefällstrecken werden neben Schneeketten auch Winterreifen, sogenannte Haftreifen, verwendet. Schneeketten sind wenig beliebt, da ihr Aufziehen auf die Fahrzeugreifen oftmals mühevoll ist und da sie so gefahren werden müssen, daß die Fahrbahn nicht beschädigt wird, d. h. daß auf nach schnee- oder eisbedeckten Straßenabschnitten folgenden trockenen Fahrbahnabschnitten die Schneeketten abzunehmen sind, zumal die Schneeketten beim Fahren auf trockenen Fahrbahnen einem hohen Verschleiß unterworfen sind und darüber hinaus keine hohe Geschwindigkeit zulassen. Insbesondere auf kurzfristig mit Eis bedeckten Straßen, z. B. bei durch auf gefrorene Fahrbahndecken auffallenden Sprühregen erzeugten Eisflächen, stehen Schneeketten und Haftreifen oftmals nicht zur Verfügung. Auch die mit Spikes versehenen Reifen sind nicht immer anwendbar.

Neben Schneeketten und Haftreifen sind Anfahrhilfen bekannt, die jedoch keinen Ersatz für Schneeketten und Haftreifen darstellen. Diese Anfahrhilfen, die aus auf den Reifen aufgesetzten Klemmbügeln bestehen, dienen lediglich dazu, ein Fahrzeug aus Morast oder Schnee ein kurzes Stück herauszufahren.

Zur Erhöhung der Griffigkeit von Fahrzeugrädern ist durch die US-A-2 443 261 eine an Radfelgen von Kraftfahrzeugen anbringbare Gleitschutzvorrichtung bekannt geworden, die aus einer Grundscheibe und einer um ihren Mittelpunkt drehbaren Ringscheibe besteht, an der Schwenkhebel zum Ein- und Ausschwenken von dreieckförmigen Gleitschutzarmen angelenkt sind, die an der Grundscheibe drehbar befestigt sind, so daß bei einer Drehung der Ringscheibe die Gleitschutzarme aus einer gegenüber dem Reifenumfang zurückgezogenen Stellung in eine radiale Betriebsstellung ausschwenkbar sind, wodurch die spitzenförmigen Endabschnitte aus der von der Reifenlauffläche gebildeten Ebene herausragen und in den Untergrund eingreifen können. Bei dieser Gleitschutzvorrichtung liegen die Gleitschutzarme auch in der ausgeschwenkten Stellung neben der Reifenseitenfläche und übergreifen in keiner Weise die Reifenlauffläche, so daß die Erhöhung der Griffigkeit der Fahrzeugräder nicht durch unmittelbares Einwirken des Reifens bzw. dessen Lauffläche auf die Gleitschutzarme oder der Gleitschutzarme auf die Bodenfläche erfolgt. Die Gleitschutzarme stellen bei Betrieb keinen integrierten Bestandteil des Reifens dar, um eine Wirkung zu erreichen, die der von in das Laufflächenprofil eines Reifens eingelassenen Spikes entspricht. Hinzu kommt noch, daß diese Gleitschutzvorrichtung viel Platz in montiertem Zustand in Anspruch nimmt.

Eine weitere, mit der FR-A-1 368 348 bekannt gewordene Antirutschvorrichtung für Fahrzeugreifen besteht aus einer Anzahl von armatigen Halterungen, die mittels einer Grundscheibe an der Felge eines jeden Kraftfahrzeuges anbringbar sind, wobei die armartigen Halterungen die Radlauffläche in der Betriebsstellung ständig übergreifen und bei Nichtgebrauch nicht aus dem Radlaufflächenbereich herausschwenkbar sind. Bei Nichtgebrauch muß die gesamte Antirutschvorrichtung von der Felge abgenommen werden. Die Montage dieser Antirutschvorrichtung ist sehr mühevoll, da für das Aufsetzen der Vorrichtung das Fahrzeug verfahren werden muß, damit die armartigen Halterungen allseitig die Radlauffläche übergreifen können.

Eine weitere, in der US-A-2 610 898 beschriebene Gleitschutzvorrichtung besteht aus einer Vielzahl von spikeartigen Rippen bzw. Zähnen, die seitlich neben dem Reifen in eine Betriebsstellung ausfahrbar sind, jedoch die Lauffläche des Reifens nicht übergreifen. Das Ein- und Ausschwenken der radial angeordneten Gleitschutzarme erfolgt unter Verwendung einer verdrehbaren, an der Felge eines Kraftfahrzeuges anbringbaren Scheibe. Die bei diesem Gleitschutz verwendeten Gleitschutzarme sind nicht federnd-elastisch, sondern starr ausgebildet, da sie bei der Umdrehung des Rades in die eis- oder schneebedeckte Fläche des Untergrundes eingreifen müssen.

Nach der DE-A-2 750 111 ist eine Gleitschutzvorrichtung für bereifte, insbesondere luftbereifte Fahrzeugräder bekannt geworden, die aus einem Traggehäuse, das von einer an der Radscheibe befestigbaren Grundscheibe und einer gegenüber dieser um den Scheibenmittelpunkt drehbaren Ringscheibe gebildet ist und aus mindestens zwei im gleichen Abstand voneinander angeordneten Gleitschutzarmen, von denen jeder Gleitschutzarm an der Grundscheibe drehbar gelagert und kurbelgetriebeartig an einem Ende eines Schwenkhebels angelenkt ist, der mit seinem anderen Ende drehbar mit der Ringscheibe an deren äußeren Umfang verbunden ist, wobei bei einer Drehung der Ringscheibe relativ zur Grundscheibe die Gleitschutzarme aus einer gegenüber dem Reifenumfang zurückgezogenen Stellung in eine radiale Betriebsstellung ausschwenkbar sind, besteht, wobei zwischen der Grundscheibe und der Ringscheibe ein die Gleitschutzarme und die Schwenkhebel in der Ausgangsstellung aufnehmender Zwischenraum ausgebildet ist, während die Schwenkhebel und die Gleitschutzarme aus Federstahl bestehen und so bemessen sind, daß die Schwenkhebel die Gleitschutzarme aus ihrer in der Ausgangsstellung nahezu gestreckten Form in eine in der Betriebsstellung in die Reifenlauffläche ragende, abgebogene Form überführen. Auch wenn die Montage dieser Gleitschutzvorrichtung mühelos ist, so weist sie jedoch eine komplizierte Bauweise auf. Hinzu kommt, daß bei dieser Gleitschutzvorrichtung die Gleitschutzarme an der Grundscheibe drehbar befestigt sind, um die Gleitschutzarme bei Nichtgebrauch in die Grundscheibe einschwenken zu können.

Eine Gleitschutzvorrichtung, bestehend aus einer im Außenflächenbereich des Reifens anliegenden, ringförmigen Tragscheibe mit einer Anzahl von im gleichen Abstand voneinander radial und feststehend angeordneten Gleitschutzarmen aus Federstahl ist der US-A-4 120 336 zu entnehmen. Die freien Enden der Gleitschutzarme sind leicht abgewinkelt vorgebogen. Im montierten Zustand der Gleitschutzvorrichtung wird die Reifenlauffläche von den Gleitschutzarmen nur mit ihren Enden übergriffen. Die freien Enden der Gleitschutzarme sind außerdem mit einem Greifprofil versehen. Mit der Tragscheibe werden die Gleitschutzarme so vorgespannt, daß die Gleitschutzarme an der Reifenlauffläche in der Betriebsstellung anliegen. Bei dieser Gleitschutzvorrichtung sind die Gleitschutzarme radial und feststehend an der Tragscheibe angeordnet. Die Gleitschutzarme sind dabei einendseitig und der Tragscheibe befestigt, die in Radachsenlängsrichtung derart verschieblich ist, daß in eingeschobenem Zustand der Tragscheibe die Gleitschutzarme die Lauffläche des Reifens nur in ihrem seitlichen Bereich übergreifen. Ein volles Übergreifen der Reifenlauffläche durch die Gleitschutzarme ist aufgrund ihrer konstruktiven Ausgestaltung nicht möglich. Würden die Gleitschutzarme die Reifenlauffläche ganz übergreifen, dann wären die Gleitschutzarme nicht völlig aus der Reifenlauffläche zurückziehbar. Eine weitere Gleitschutzvorrichtung für Kraftfahrzeuge mit an einem Rad befestigbaren, in einer Betriebsstellung an der Lauffläche des Rades anliegenden, zum Eingriff mit der Straßenoberfläche bestimmten Gleitschutzelementen ist nach der DE-A-2 852 235 in der Weise ausgebildet, daß ein an der Felge des Rades dauernd befestigbarer Träger vorgesehen ist, an dem das Gleitschutzelement mindestens in der Betriebsstellung gehalten ist. Bei dieser Gleitschutzvorrichtung besteht jedes Gleitschutzelement aus zwei Armteilen, die biegesteif ausgebildet und über ein Gelenk derart miteinander verbunden sind, daß der eine Armteil die Reifenlauffläche übergreift, während der andere Armteil radial an der Seite des Rades zu liegen kommt. Dieser Armteil ist mit seinem freien Ende an einem an der Felge des Rades befestigten Träger derart verschwenkbar angelenkt, daß er aus der die Reifenlauffläche übergreifenden Betriebsstellung in eine Nichtbetriebsstellung seitlich des Fahrzeugrades überführbar ist. Bei Nichtbetrieb verbleibt der Träger mit den Gleitschutzarmen an der Felge des Rades, während lediglich die Gleitschutzelement aus der die Reifenlauffläche übergreifenden Betriebsstellung geschwenkt sind. Für dieses Verschwenken bzw. Einziehen der Gleitschutzelemente müssen besondere Einrichtungen vorgesehen sein, wodurch die Gleitschutzvorrichtung eine aufwendige konstruktive Ausgestaltung aufweist. Da darüber hinaus die Gleitschutzelemente bei dieser Gleitschutzvorrichtung starr und unbeweglich an der Lauffläche des Fahrzeugrades gehalten sind, ist das Problem der Einbeziehung eines geringen Abhebeeffektes der freien Enden der Gleitschutzelemente von der Reifenlauffläche, um ein Herausschleudern von sich zwischen den Gleitschutzarmen und der Reifenlauffläche ansammelndem Schnee und Eis zu ermöglichen, nicht lösbar.

Hier will die Erfindung Abhilfe schaffen.

Die Erfindung löst die Aufgabe, eine Vorrichtung für bereifte, insbesondere luftbereifte Fahrzeugräder zu schaffen, die als Gleitschutz und zur Erhöhung der Griffigkeit von Fahrzeugrädern auf Eis- und Schneeflächen dient, die trotz hoher Wirksamkeit in ihrer Herstellung wirtschaftlich ist sowie höhere Geschwindigkeiten als beim Fahren mit Schneeketten und anderen Gleitschutzvorrichtungen zuläßt, die die Wirksamkeit bekanter Gleitschutzvorrichtungen, insbesondere während des Bremsvorganges, übertrifft und mit der ein Gleitschutz in Form von Gleitschutzstiften erhalten wird, bei dem die Gleitschutzstifte an der Reifenlauffläche gehalten werden, der gegenüber Schneeketten und den bekannten Gleitschutzvorrichtungen mühelos jederzeit angebracht und auch wieder abgenommen werden kann und der eine einfache technische Konstruktion aufweist.

Zur Lösung dieser Aufgabe wird eine Gleitschutzvorrichtung für bereifte, insbesondere luftbereifte, Fahrzeugräder für Eis- und Schneeflächen der eingangs beschriebenen Art vorgeschlagen, die erfindungsgemäß in der Weise ausgebildet ist, daß jeder einteilig ausgebildete und vorgebogene Gleitschutzarm in seinem abgebogenen Bereich mit einer sein Gewicht erhöhenden Verstärkung versehen und in einem begrenzten Bereich frei schwenkbar an einer Schwenkachse gehalten ist, daß auf der Tragscheibe eine weitere Scheibe gehalten ist, die mit die Tragscheibe mit den Radmuttern verriegelnden Einrichtung versehen ist, wobei jede Radmutter an ihrem, die Tragscheibe tragenden freien Ende mit einer über der aufgesetzten Tragscheibe liegenden Ringnut versehen ist, daß die weitere Scheibe außenseitig mit in der von den Ringnuten der Radmuttern gebildeten Ebene liegenden Armen versehen ist, deren Anzahl jener der Radmuttern entspricht, wobei jeder Arm mit einer halbkreisförmigen Eingriffausnehmung mit einem dem Durchmesser der Ringnut einer jeden Radmutter entsprechenden Durchmesser versehen ist, und daß dei Verdrehen der Scheibe deren Eingriffausnehmungen in die Ringnuten der Radmuttern bei gleichzeitiger Anlage der die Eingriffausnehmungen aufweisenden Arme der Scheibe im Bereich von in der Tragscheibe vorgesehenen Ausnehmungen für die Radmuttern auf der Tragscheibe und bei gleichzeitiger Abstützung auf schulterartigen, an den Radmuttern vorgesehenen Abschnitten einführbar sind.

Die mit einer derart ausgebildeten Gleitschutzvorrichtung erzielten Vorteile liegen insbesondere darin, daß bei einem Drehen der Reifen die Enden der Gleitschutzarme zwischen dem Reifenprofil und der Unterlage, wie Straße oder Untergrund, zu liegen kommen, was unterstützt wird durch die radial verlaufend angeordneten Gleitschutzarme an der an der Felge des Fahrzeugrades befestigten Tragscheibe der Gleitschutzvorrichtung, wobei die Gleitschutzarme aus Federbandstahl oder federnd-elastischen Kunststoffen bestehen und von der äußeren Reifenseite bis in den Laufflächenbereich des Reifens ragen. Die Gleitschutzvorrichtung weist relativ wenig Bauteile auf und ist daher in ihrer Konstruktion einfach. Die Schwierigkeiten beim Ein- und Ausschwenken der Gleitschutzarme ergeben sich im Falle einer derartigen Ausgestaltung der Gleitschutzvorrichtung in keiner Weise, da hier eine Schwenkbarkeit der Gleitschutzarme an der Tragscheibe nur in dem Umfang erfolgt, als beim Ansetzen der Gleitschutzvorrichtung und Befestigen an einer Radfelge derjenige Laufflächenbereich des Reifens, der gerade auf der Straße sich abstützt, keinen Gleitschutzarm aufnehmen kann.

Die Materialverstärkung und die damit verbundene Gewichtserhöhung im abgebogenen Bereich der Gleitschutzarme der Gleitschutzvorrichtung erbringt den Vorteil, daß nach der Befestigung der Gleitschutzvorrichtung an einer Radfelge sich die Gleitschutzarme beim Anfahren des Fahrzeuges aufstellen, d. h. einen gleichmäßigen Abstand voneinander einnehmen, so daß bei einem Bremsvorgang auf die Reifenlauffläche gleichmäßig verteilt die Gleitschutzarme für einen Eingriff zur Verfügung stehen. Dieses zusätzliche Gewicht in Form einer Materialverstärkung im abgebogenen Bereich eines jeden Gleitschutzarmes wirkt als Kontergewicht zum abgewinkelten Gleitschutzarmschenkel. Dadurch bleiben die Gleitschutzarme auch bei höheren Fahrgeschwindigkeiten mit beiden Schenkeln am Reifen zu liegen. Die begrenzte Verschwenkbarkeit der Gleitschutzarme an der Tragscheibe ist für die einfache Montage am stehenden Fahrzeug vorteilhaft, aber auch für die Funktion bei Fahrbetrieb, da die Aufschlagwucht der Gleitschutzarme beim Auftreffen auf den Boden gemildert wird. Außerdem wird die Anpassung der Gleitschutzarme an den Untergrund verbessert, die Gleitschutzarmbelastung verkleinert und eine radiale Ausrichtung aller Gleitschutzarme ist möglich.

Insbesondere aufgrund der Ausgestaltung, daß die Gleitschutzarme nur in einem kleinen Bereich verschwenkbar an der an der Felge befestigten Tragscheibe gehalten sind, ist die Montage der Vorrichtung an einer Radfelge mühelos insofern, als im Auflagebereich des Reifens auf einem Untergrund die Gleitschutzarme seitlich abgeschwenkt werden, die sich dann beim Anfahren wiederum so an die Reifenlauffläche anlegen, daß sie zu den anderen Gleitschutzarmen eine radiale Stellung einnehmen. Wesentlich ist hierbei, daß beim Fahren auftretende Radialkräfte nicht mehr auf die Tragscheibe übertragen werden, sondern von den verschwenkbaren Gleitschutzarmen aufgenommen werden. Beim Bremsen werden die Gleitschutzarme durch das auftretende Massenträgheitsmoment vor die Reifen gelegt und dadurch die Bremswirkung erhöht. Die Gleitschutzarme dienen somit als reibungserhöhende Elemente.

Da die Gleitschutzarme aus Kunststoffen bestehen, ein gewisses federnd-elastisches Verhalten aufweisen und mit einer Materialverstärkung in ihrem abgebogenen Bereich versehen sind, entsteht beim Fahren mit aufgesetzter Gleitschutzvorrichtung nur ein ganz geringer Abhebeeffekt der freien Enden der Gleitschutzarme von der Reifenlauffläche, jedoch beim Durchlaufen desjenigen Bereiches, in dem der Reifen kraftschlüssig mit der Straße ist, erfolgt ein Andrücken der Gleitschutzarme an die Reifenlauffläche, so daß durch diese Wechselwirkung zwischen Anpreß- und Abhebeeffekt sich zwischen den Gleitschutzarmen und der Reifenlauffläche ansammelnder Schnee und ansammelndes Eis herausgeschleudert werden. Dieser Abhebeeffekt tritt jedoch nur in dem Bereich der abgeobenen freien Enden der Gleitschutzarme auf und ist äußerst gering. Beim Fahren stellen sich darüber hinaus die Gleitschutzarme radial auf und nehmen immer den gleichen Abstand zueinander ein. Die Verschwenkbarkeit der Arme stellt einerseits eine wertvolle Hilfe für die Montage der Gleitschutzvorrichtung dar und andererseits unterstützt sie gleichzeitig die Bremswirkung. Die Montage der Gleitschutzvorrichtung ist somit mühelos und erfolgt durch einfaches Aufsetzen auf die verwendeten, an der Felge vorgesehenen Radmuttern. Hierzu wird lediglich die die Gleitschutzarme tragende Tragscheibe so auf die Radmuttern aufgesetzt, daß diese mit ihren kopfartigen Enden durch in die Tragscheibe vorgesehene Ausnehmungen hindurchgreifen. Die auf der Tragscheibe drehbar angeordnete weitere Scheibe ist mit Eingriffeinrichtungen derart versehen, daß bei einem Verdrehen der Scheibe eine Verriegelung der Tragscheibe mit den Radmuttern erfolgt. Durch entgegengesetztes Verdrehen der weiteren Scheibe ist die Verriegelung zu den Radmuttern lösbar und somit die Gleitschutzvorrichtung leicht abnehmbar.

Nach erfolgter Befestigung der Gleitschutzvorrichtung an der Felge eines Fahrzeugrades übergreifen die Gleitschutzarme den Fahrzeugreifen laufflächenseitig. Das freie Ende eines jeden Gleitschutzarmes kommt im Bereich der Lauffläche des Reifens zu liegen. Die Fertigung der Gleitschutzvorrichtung ist ferner mit niedrigen Kosten durchführbar, da die Vorrichtung selbst aus nur wenigen Teilen besteht. Bei Nichtgebrauch ist die Gleitschutzvorrichtung auf kleinstem Raum unterbringbar, wobei die Möglichkeit besteht, die Gleitschutzvorrichtung auf den im Kofferraum eines Kraftfahrzeuges mitgeführten Ersatzreifen so aufzusetzen, daß die Gleitschutzarme den Reifen des Ersatzrades übergreifen. Da darüber hinaus die Gleitschutzvorrichtung eine relativ flache Konstruktion aufweist, können mehrere Gleitschutzvorrichtungen mühelos übereinandergesetzt an dem Ersatzreifen gehalten werden.

Da sich die Gleitschutzarme im Betriebszustand selbsttätig aufgrund ihrer Anordnung und Ausbildung den Walkbewegungen des Reifens anpassen, erfolgt nicht nur eine Schonung des Reifens, sondern auch eine Schonung von Fahrzeug und Straßen, da ein sehr ruhiger Lauf erzielt wird. Die Gleitschutzvorrichtung kan für die meisten Normalfelgen gebaut werden, ohne daß eine Veränderung der Felgen erforderlich wird.

Nach einer vorteilhaften Ausgestaltung der Erfindung ist jede Ausnehmung in der Tragscheibe für die Radmuttern von einem kreisförmigen Abschnitt in einem gegenüber dem Durchmesser der Radmuttern größeren Durchmesser und einem sich an den kreisförmigen Abschnitt anschließenden länglichen Abschnitt gebildet, dessen Durchmesser dem Durchmesser der Radmuttern im Bereich deren Ringnuten entspricht. Jede Ausnehmung in der Tragscheibe für die Radmuttern ist dabei als Langloch mit einem gegenüber dem Durchmesser der Radmuttern größeren Durchmesser ausgebildet, wobei alle Ausnehmungen in Bezug auf ihre Längsachsen radial verlaufend in der Tragscheibe angeordnet sind.

Die auf der Tragscheibe gehaltene weitere Scheibe ist mittels einer auf der Tragscheibe angeordneten Abdeckscheibe abgedeckt, welche eine der Anzahl der Radmuttern entsprechende Anzahl von Ausnehmungen aufweist.

Eine weitere Ausführungsform der Erfindung sieht vor, daß die Tragscheibe mit den Gleitschutzarmen als Ring ausgebildet ist, dessen mittige Öffnung mittels einer Grundscheibe verschlossen ist, die in einer an der Ringinnenkante ausgebildeten Führung um ihre mittige Achse verdrehbar gehalten ist und die Ausnehmungen für die Radmuttern aufweist.

Im folgenden wird der Gegenstand der Erfindung in den Zeichnungen erläutert. Es zeigt

Figur 1 eine teilweise Ansicht auf die Gleitschutzvorrichtung,

Figur 2 teils in Ansicht, teils in einem senkrechten Schnitt einen an der an einer Radmutter befestigten Tragscheibe schwenkbar befestigten Gleitschutzarm,

Figur 3 eine Draufsicht auf eine an der Tragscheibe gehaltene Grundscheibe mit Ausnehmungen für die Radmuttern,

Figur 4 eine Draufsicht auf eine weitere Scheibe mit Einrichtungen zum Verriegeln der Gleitschutzvorrichtung an den Radmuttern,

Figur 5 einen senkrechten Schnitt gemäß Linie V-V in Fig. 3,

Figur 6 teils in Ansicht, teils in einem senkrechten Schnitt eine Radmutter mit aufgesetzter Tragscheibe,

Figur 7 in einer Ansicht von oben die Tragscheibe mit aufgesetzter weiterer Scheibe zum Verriegeln der Gleitschutzvorrichtung an den Radmuttern,

Figur 8 in einer Seitenansicht die Tragscheibe mit der aufgesetzten weiteren Scheibe zum Verriegeln der Gleitschutzvorrichtung an den Radmuttern entsprechend Fig. 7,

Figur 9 einen Gleitschutzarm in einer Ansicht auf seine Innenseite,

Figur 10 einen senkrechten Schnitt gemäß Linie X-X von Fig. 9,

Figur 11 den Gleitschutzarm in einer Ansicht auf seine Außenseite,

Figur 12 einen vergrößerten senkrechten Schnitt des freien Endes eines Gleitschutzarmes, und

Figur 13 einen auf der Lauffläche eines Reifens aufliegenden Gleitschutzarm in einer Ansicht von oben.

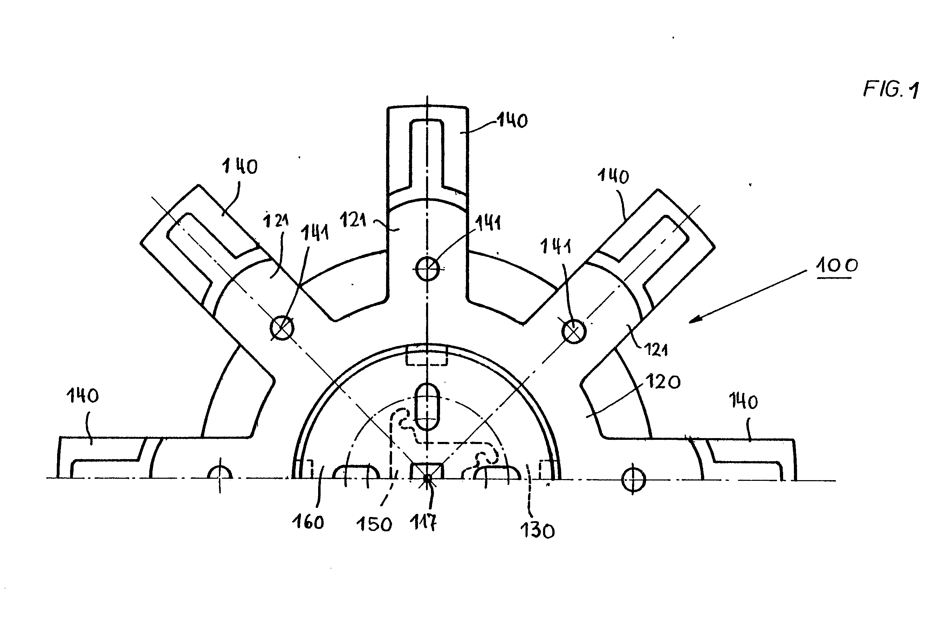

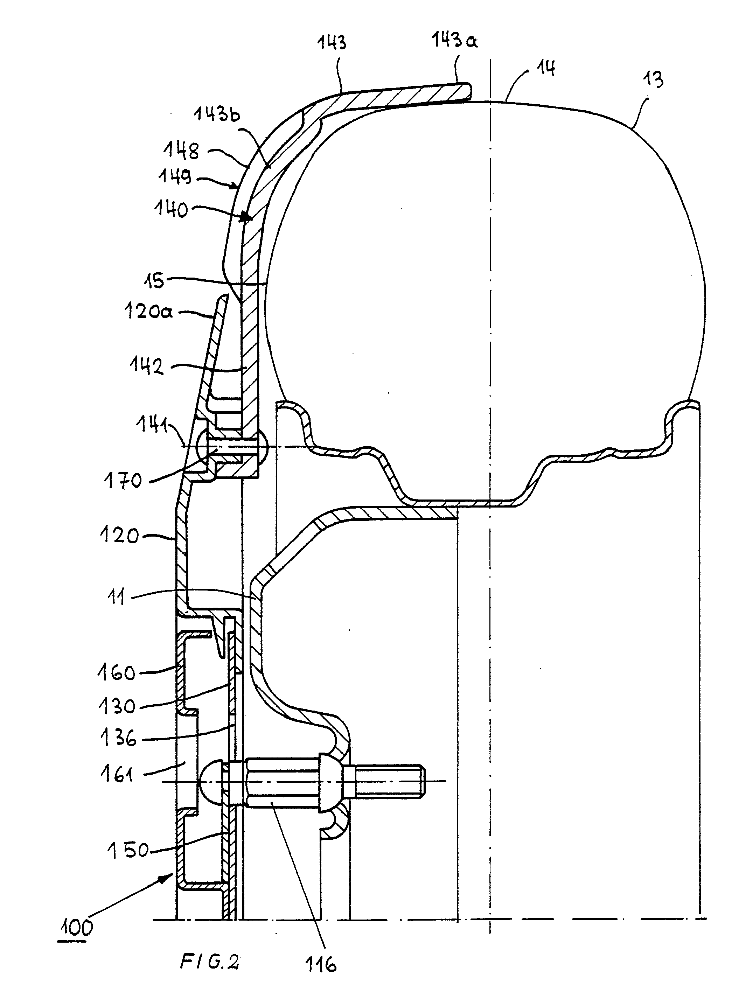

Wie Fig. 1 und 2 zeigen besteht die Gleitschutzvorrichtung 100 aus einer Tragscheibe 120 und aus einer Anzahl von an der Tragscheibe 120 befestigten Gleitschutzarmen 140.

Die Gleitschutzvorrichtung 100 ist an der mit einem Reifen 13 versehenen Radscheibe 11 oder an der Felge eines Fahrzeugrades befestigt. Die Radscheibe 11 ist mit einem in der Zeichnung nicht dargestellten Bremsteil versehen. Der Laufflächenbereich des Reifens 13 ist mit 14 und die Außenseite des Reifens mit 15 bezeichnet (Fig. 2).

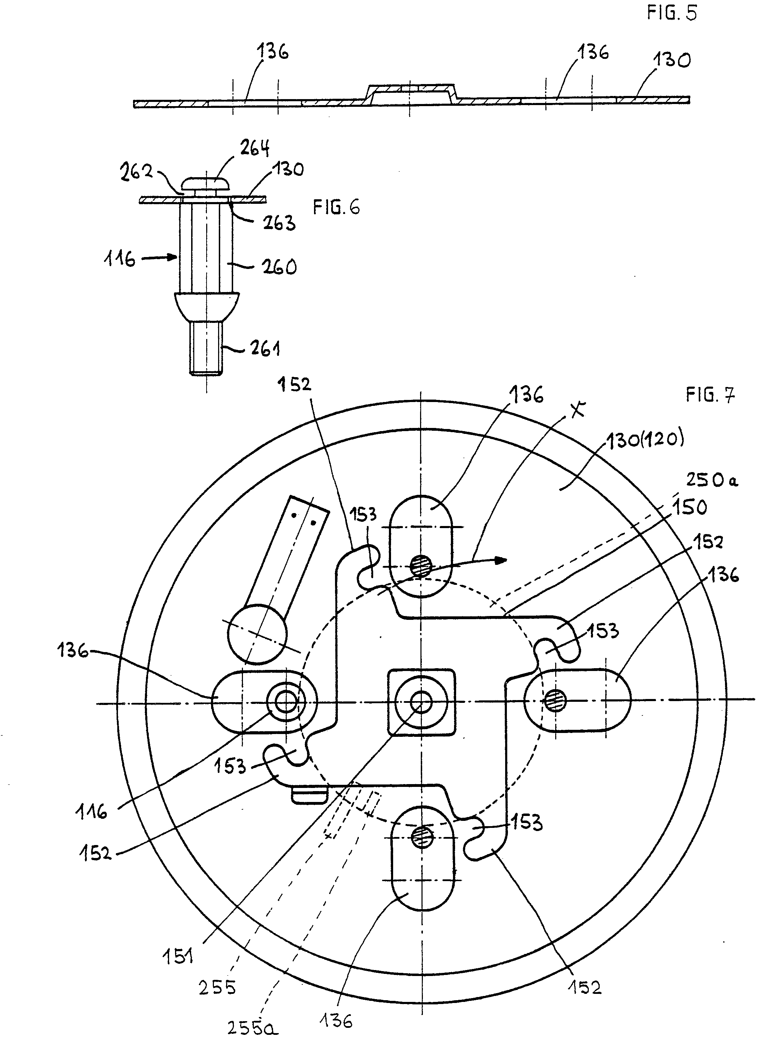

Die Befestigung der Tragscheibe 120 an der Radscheibe oder der Felge 11 des Fahrzeugrades erfolgt mittels Radmuttern 116 (Fig. 2 und 6) oder Radbolzen, jedoch können an der Felge selbst schrauben- oder bolzenartige Halterungen für die Befestigung der Tragscheibe 120 an der Felge 11 vorgesehen sein.

Bei der in Fig. 2 gezeigten Ausführungsform ist die Tragscheibe 120 ringförmig ausgebildet und trägt mittig eine Grundscheibe 130, die mittels innenrandseitiger Führungen an dem Ring der Tragscheibe 120 drehbar gehalten ist. Diese Grundscheibe 130 kann jedoch auch mit dem Ring der Tragscheibe 120 fest verbunden sein, worauf nachstehend noch näher eingegangen wird. Ist die Grundscheibe 130 mit dem Ring der Trangscheibe 120 fest verbunden, dann ist die Tragscheibe 120 einstückig ausgebildet. Auf der Tragscheibe 120 bzw. ihrer Grundscheibe 130 ist dann eine weitere Scheibe 150 drehbar gehalten, die zur Verriegelung der Gleitschutzvorrichtung an den Radmuttern 116 dient.

Die Tragscheibe 120 bzw. ihre Grundscheibe 130 weist eine Anzahl von Ausnehmungen 136 für das Hindurchführen der Radmuttern 116 auf. Die Anzahl dieser Ausnehmungen 136 entspricht der Anzahl der jeweils vorhandenen Radmuttern 116. Bei der in der Zeichnung dargestellten Ausführungsform weist die Grundscheibe 130 der Tragscheibe 120 vier Ausnehmungen 136 auf. Ist die Grundscheibe 130 in den Ring der Tragscheibe 120 fest integriert, d. h. wenn die Tragscheibe 120 als vollflächige Scheibe ausgebildet ist, dann ist in dieser Tragscheibe 120 die der Anzahl der Radmuttern 116 entsprechende Anzahl von Ausnehmungen 136 vorgesehen.

Ist die Tragscheibe 120 als vollflächige Scheibe ausgebildet und mit den Ausnehmungen 36 für die Radmuttern 116 versehen oder ist bei der ringscheibenförmigen Ausbildung der Tragscheibe 120 an dieser die Grundscheibe 130 mit den Ausnehmungen 135 für die Radmuttern 116 fest angeordnet, dann sind die Gleitschutzarme 140 um Schwenkachsen 141, die parallel zur Radscheibenlagerachse 117 verlaufen, verschwenkbar an dem äußeren Umfang der Tragscheibe 120 oder benachbart zum Scheibenumfang angeordnet, wie dies aus Fig. 2 ersichtlich ist.

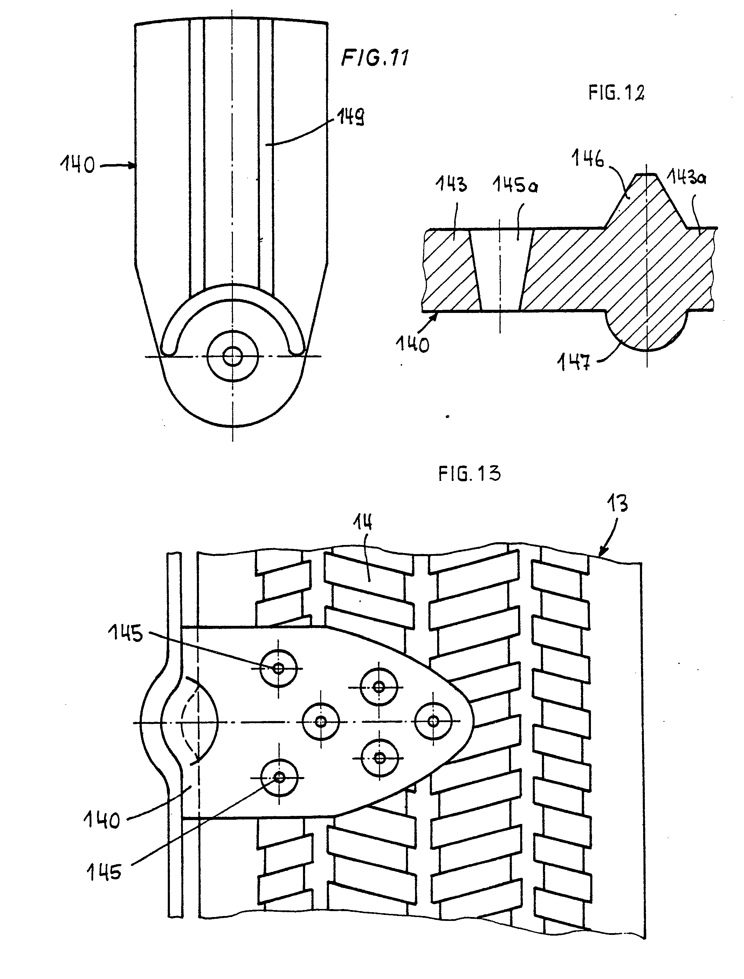

Jeder Gleitschutzarm 140 besteht aus einem einendseitig abgebogenen Profilkörper. An dem parallel zur Außenseitenfläche 15 des Reifens 13 verlaufenden Armabschnitt 142 schließt sich dann der endseitige abgebogene Abschnitt 143 an, der bei montierter Gleitschutzvorrichtung die Reifenlauffläche 14 übergreift (Fig. 2 und 13).

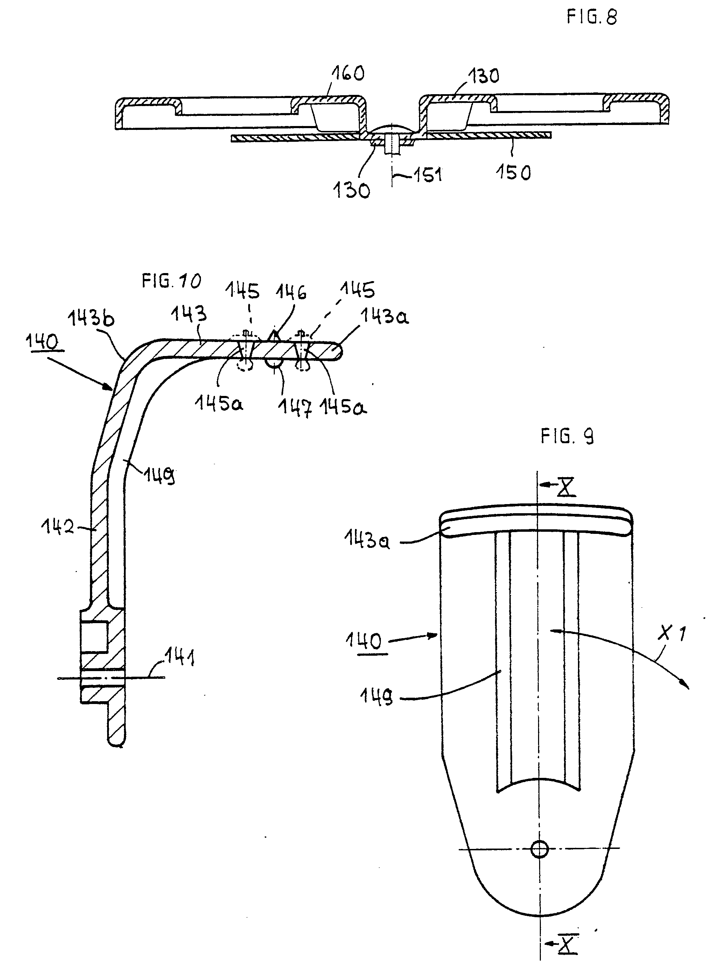

Jeder Gleitschutzarm 140 besteht aus Kunststoffen oder anderen geeigneten Werkstoffen, wobei besonders vorteilhaft solche Kunststoffe sind, die ein federnd-elastisches Verhalten zeigen, jedoch eine ausreichende Eigenstabilität besitzen. Jeder Gleitschutzarm 140 weist an seinem freien Ende 143a an der der Reifenlauffläche 14 zugekehrten Seite ein noppenartiges Profil 147 und an der außen liegenden Seite mindestens einen aus dem Kunststoffmaterial des Gleitschutzarmes gebildeten Gleitschutzstift 146 auf. Das noppenartige Profil 147 an der der Reifenlauffläche 14 zugekehrten Seite des Gleitschutzarmes 140 erhöht die Reibung zwischen dem Gleitschutzarm 140 und dem Profil der Reifenlauffläche 14, so daß eine gute Haftung des Gleitschutzarmes an der Reifenlauffläche gewährleistet ist. Anstelle des aus dem Gleitschutzarmwerkstoff ausgebildeten und gleichzeitig bei der Herstellung des Gleitschutzarmes 140 mit ausgeformten Gleitschutzstiftes 146 kann das freie Ende 143a des Gleitschutzarmes 140 mindestens mit einer Durchbrechung 145a für das Einsetzen eines Gleitschutzstiftes aus metallischen Werkstoffen versehen sein. Da jeder Gleitschutzarm 140 aus einem sehr breit bemessenen Profilkörper besteht, ist die Möglichkeit gegeben, an dem freien Gleitschutzarmende 143a eine Vielzahl von Gleitschutzstiften anzuordnen (Fig. 9 bis 13).

Darüber hinaus ist jeder Gleitschutzarm 140 mit einer Verstärkung 148 im abgebogenen Bereich 143b versehen. Durch diese Verstärkung 148, die aus dem gleichen Material hergestellt ist, aus dem der Gleitschutzarm besteht, erfolgt eine Gewichtserhöhung des Gleitschutzarmes in seinem abgebogenen Bereich 143b, so daß durch diese Gewichtserhöhung ein seitliches Abheben des Armabschnittes 142 des Gleitschutzarmes 140 von der Reifenaußenseitenfläche 15 vermieden wird. Darüber hinaus kann jeder Gleitschutzarm 140 auch noch mit einer Versteifungsrippe 149 versehen sein, die gleichzeitig die Materialverstärkung 148 bildet (Fig. 9 bis 11).

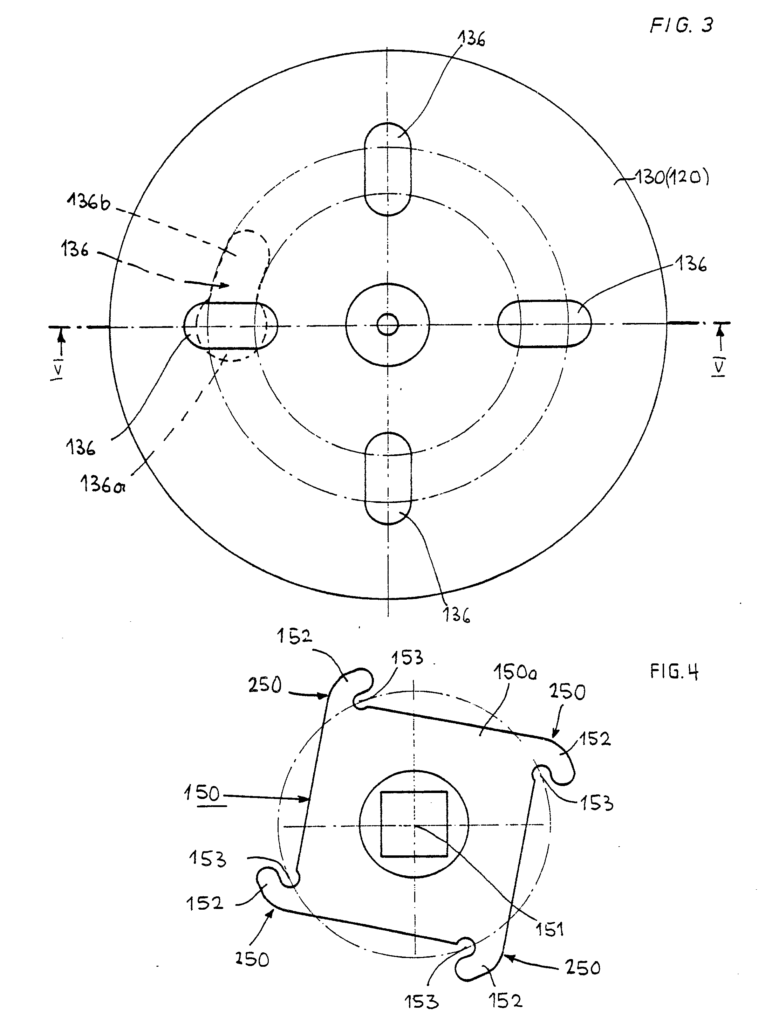

Die auf der Tragscheibe 120 bzw. ihrer Grundscheibe 130 um die Achse 151 drehbar angeordnete weitere Scheibe 150 weist eine Verriegelungseinrichtung 250 auf, mit der die Befestigung und die Verriegelung der Gleitschutzvorrichtung an der Radscheibe oder der Felge 11 des Fahrzeugrades erfolgt. Diese Scheibe 150 besteht aus einem etwa quadratischen Plattenkörper 150a, der in seinen vier Eckbereichen mit vier seitlichen Armen 152 versehen ist, von denen jeder Arm 152 mit einer halbkreisförmigen Eingriffausnehmung 153 versehen ist (Fig. 4). Mittels dieser Eingriffausnehmungen 153 an den Armen 152 der Scheibe 150 erfolgt die Verriegelung der auf die Radscheibe oder die Felge 11 aufgesetzten Tragscheibe 120 bzw. deren Grundscheibe 130 derart, daß die Eingriffausnehmungen 153 bei einem Verdrehen der Scheibe 150 in Pfeilrichtung X in die durch die Ausnehmungen 136 hindurchgreifenden Abschnitte der Radmuttern 116 eingreifen.

Diese Radmuttern 116 weisen die in den Fig. 2 und 6 gezeigte Ausführungsform auf. Hiernach besteht jede Radmutter 116 aus einem bolzenförmigen Körper 260 mit endseitig ausgebildetem Außengewinde 261. Das andere, kopfartig ausgebildete Ende 264 der Radmutter 116 weist einen eingezogenen Abschnitt 262 auf bzw. ist mit einer Ringnut 262 versehen. Der Übergang der Ringnut 262 zum bolzenförmigen Körper 260 wird von einem schulterartigen Abschnitt 263 gebildet, der so ausgebildet sein kann, daß er gleichzeitig als Auflagefläche für die Grundscheibe 130 der Tragscheibe 120 dient, ohne dabei das Eingreifen der Verriegelungseinrichtung 250 zu beeinträchtigen.

Die Ausnehmungen 136 in der Grundscheibe 130 der Tragplatte 120 bzw. in der Tragplatte 120 selbst weisen einen Durchmesser auf, der mindestens dem Durchmesser der Radmuttern 116 entspricht. Wie Fig. 3 und 7 zeigen, sind die Ausnehmungen 136 als Langlöcher ausgebildet und derart angeordnet, daß die Ausnehmungen mit ihren Längsachsen radial zu liegen kommen. Es besteht jedoch auch die Möglichkeit, den Ausnehmungen 136 eine andere Ausgestaltung zu geben. So kann jede Ausnehmung 136 aus einem kreisförmigen Abschnitt 136a bestehen, dessen Durchmesser größer ist als der Durchmesser der Radmutter 116. An diesen kreisförmigen Abschnitt 136 a schließt sich dann ein langlochförmiger Abschnitt 136b an, dessen Durchmesser dem Durchmesser der Ringnut 262 der Radmutter 116 entspricht. Diese Art von Ausnehmungen 136 ist in der Tragscheibe 120 bzw. deren Grundscheibe 130 derart angeordnet, daß die langlochartigen Abschnitte 136b auf einer kreisförmigen Linie liegen. Die Verriegelung der Gleitschutzvorrichtung 100 an den Radmuttern 116 erfolgt dann lediglich durch Verdrehen der Grundscheibe 130 in dem Ring der Tragscheibe 120, so daß die langlochförmigen Abschnitte 136b in den Bereich der Ringnuten 262 der Radmuttern 116 zu liegen kommen, wodurch die Verriegelung bewirkt wird. Eine derartige Ausgestaltung ist jedoch nur dann möglich, wenn die Grundscheibe 130 in dem Ring der Tragscheibe 120 drehbar gelagert ist. Eine gesondert ausgebildete Scheibe 150, die dann mit Verriegelungseinrichtungen 250 versehen ist, ist bei dieser Ausführungsform nicht erforderlich. Die Grundscheibe 130 ist dann mit einer in der Zeichnung nicht dargestellten Handhabe versehen, um zu Verriegelungszwecken die Grundscheibe 130 im Ring der Tragscheibe 120 verdrehen zu können.

Weist jedoch die Grundscheibe 130 eine in den Fig. 3 bis 7 dargestellte Ausgestaltung der Ausnehmungen 136 auf, ist die Verwendung einer Scheibe 150 mit der Verriegelungseinrichtung 250 erforderlich. Damit die Scheibe 150 um ihre Drehachse 151 zu Verriegelungszwecken betätigt werden kann, ist auch hier die Scheibe 150 mit einer in der Zeichnung nicht dargestellten Handhabe versehen.

Die Anzahl der die halbkreisförmigen Eingriffausnehmungen 153 tragenden Arme 152 an der Scheibe 150 entspricht der Anzahl der vorhandenen Radmuttern 116.

Die Anordnung der Eingriffausnehmungen 153 an den Armen 152 der Scheibe 150 ist derart, daß bei einem Verdrehen der Scheibe 150 in Pfeilrichtung X die Eingriffausnehmungen 153 vorlaufend sind und somit in Eingriff mit den Ringnuten 262 der Radmuttern 116 gebracht werden. Die Tragscheibe 120 bzw. ihre Grundscheibe 130 ist zu den Radmuttern 116 bei montierter Gleitschutzvorrichtung 100 derart angeordnet, daß sie in etwa in der von den schulterförmigen Abschnitten 263 der Radmuttern 116 gebildeten Ebene zu liegen kommt, so daß die auf der Tragscheibe 120 bzw. deren Grundscheibe 130 angeordnete Scheibe 150 mit ihren Armen 152 in der von den Ringnuten 262 der Radmuttern 116 gebildeten Ebene zu liegen kommt, so daß bei einem Verdrehen der Scheibe 150 deren Eingriffausnehmungen 153 in die Ringnuten 262 der Radmuttern 116 eingreifen können. Die Radialanordnung der Ausnehmungen 136 in der Grundscheibe 130 erbringt darüber hinaus auch noch den Vorteil, daß ein Ausrichten der Gleitschutzvorrichtung 100 während des Befestigungsvorganges an den Radmuttern 116 möglich ist. Im verriegelten Zustand übergreifen dann die Arme 152 mit ihren, den Eingriffausnehmungen 153 benachbarten Bereichen diejenigen Bereiche der Ausnehmungen 136, die nach dem Hindurchführen der Radmuttern 116 durch die Ausnehmungen 136 verbleiben, so daß ein fester Sitz der Gleitschutzvorrichtung 100 auf der Radscheibe oder der Felge 11 des Fahrzeugrades erreicht wird.

Anstelle der voranstehend beschriebenen und in der Zeichnung dargestellten Verriegelungseinrichtung 250 können auch andersartig ausgestaltete Verriegelungseinrichtungen zur Anwendung gelangen. Wesentlich ist, die Verriegelung unter Zuhilfenahme der Radmuttern 116 aufgrund deren konstruktiver Ausgestaltung zu erreichen.

Die auf der Tragscheibe 120 oder deren Grundscheibe 130 angeordnete Scheibe 150 ist mittels einer Abdeckscheibe 160 abgedeckt, die entweder auf der Tragscheibe 120 oder der Grundscheibe 130 derart gehalten ist, daß das Verdrehen der Scheibe 150 in keiner Weise beeinträchtigt wird (Fig. 2). Diese Abdeckscheibe 160 ist mit einer in der Zeichnung mit 161 angedeuteten Ausnehmung versehen, durch die die an der Scheibe 150 befestigte und in der Zeichnung nicht dargestellte Handhabe hindurchgreifen kann. Außerdem weist die Abdeckscheibe 160 eine der Anzahl der Radmuttern entsprechende Anzahl von Ausnehmungen auf. Die Abdeckscheibe 160 kann mit einer Griffprofilierung für eine Handbetätigung drehbar auf der Tragscheibe 120 oder deren Grundscheibe 130 gehalten und mit der Scheibe 150 verbunden sein.

Ist die Tragscheibe 120 fest mit der Grundscheibe 130 verbunden oder wenn die Tragscheibe 120 vollflächig ausgebildet ist, dann sind die Gleitschutzarme 140 am Umfang der Tragscheibe 120 über Schwenkachsen 181 an der Tragscheibe verschwenkbar gelagert. Diese Verschwenkbarkeit der Gleitschutzarme 140 wird durch Niet- oder Schraubverbindungen 170 erreicht, die so ausgebildet sind, daß die Verschwenkbarkeit der Gleitschutzarme 140 in Pfeilrichtung X1 nicht beeinträchtigt wird (Fig. 2 und 9). Die Tragscheibe 120 ist dann mit einem umlaufenden, verlängerten Abschnitt 120a versehen, der den Anlenkungsbereich für die Gleitschutzarme 140 übergreift.

Bei der Ausführungsform, bei der die Grundscheibe 130 drehbar in der ringförmig ausgebildeten Tragscheibe 120 gehalten ist, ist die Grundscheibe 130 mit den Radmuttern 116 mittels der Scheibe 150 verriegelt. Die Gleitschutzarme 140 sind fest an der Tragscheibe 120 angeordnet, so daß durch die Verdrehmöglichkeit der Tragscheibe 120 zur Grundscheibe 130 eine Postionsveränderung der an den Reifen 13 angelegten Gleitschutzarme 140 in einem kleinen Bereich möglich ist.

Die Anzahl der an der Tragscheibe 120 befestigten Gleitschutzarme 140 richtet sich jeweils nach der Größe des mit der Gleitschutzvorrichtung 100 zu versehenen Reifens 13. Um ein seitliches Ausbrechen der Gleitschutzarme 140 zu verhindern, kann die Tragscheibe 120 armartige Verlängerungen 121 aufweisen, an denen die Gleitschutzarme 140 schwenkbar gehalten sind und die außenseitig die Gleitschutzarme übergreifen (Fig. 1).

Die Scheibe 150 steht mit einer Arretierungseinrichtung 255 in Verbindung, und zwar derart, daß, wenn die Verriegelung mit den Radmuttern erfolgt ist, die Scheibe 150 sich nicht selbsttätig aus ihrer Verriegelungsstellung lösen, kann, sondern erst nach Lösen der Arretierungseinrichtung, die als Drucktastenraster ausgebildet sein kann (Fig. 7). Vorteilhafterweise ist dann die Scheibe 150 als Kreisscheibe 150a ausgebildet, in deren Umfangsbereich die Arretierungseinrichtung 255 angeordnet ist, wobei die Scheibe 150a mit einem Anschlag 215a versehen ist, der mit der Arretierungseinrichtung zusammenwirkt.

**Patentansprüche**

1. Gleitschutzvorrichtung für bereifte, insbesondere luftbereifte, Fahrzeugräder für Eis- und Schneeflächen, bestehend aus einer an der Radscheibe oder der Felge (11) eines Fahrzeugrades befestigten Tragscheibe (120) mit einer Anzahl von in gleichem Abstand voneinander radial verlaufenden und um parallel zur Radachse verlaufenden Achsen verschwenkbaren, in ausgeschwenkter Stellung die Reifenlauffläche (14) übergreifenden Gleitschutzarmen (140), die an ihren die Reifenlauffläche übergreifenden Endabschnitten außenseitig ein Greifprofil oder Gleitschutzstifte (146) tragen, dadurch gekennzeichnet, daß jeder einteilig ausgebildete und vorgebogene Gleitschutzarm (140) in seinem abgebogenen Bereich (143b) mit einer sein Gewicht erhöhenden Verstärkung (148) versehen und in einem begrenzten Bereich frei verschwenkbar an einer Schwenkachse (141) gehalten ist, daß auf der Tragscheibe (120) eine weitere Scheibe (150) gehalten ist, die mit die Tragscheibe (120) mit den Radmuttern (116) verriegelnden Einrichtung (250) versehen ist, wobei jede Radmutter (116) an ihrem, die Tragscheibe (120) tragenden freien Ende mit einer über der aufgesetzten Tragscheibe (120) liegenden Ringnut (262) versehen ist, daß die weitere Scheibe (150) außenseitig mit in der von den Ringnuten (262) der Radmuttern (116) gebildeten Ebene liegenden Armen (152) versehen ist, deren Anzahl jener der Radmuttern (116) entspricht, wobei jeder Arm (152) mit einer halbkreisförmigen Eingriffausnehmung (153) mit einem dem Durchmesser der Ringnut (262) einer jeden Radmutter (116) entsprechenden Durchmesser versehen ist, und daß bei Verdrehen der Scheibe (150) deren Eingriffausnehmungen (153) in die Ringnuten (262) der Radmuttern (116) bei gleichzeitiger Anlage der die Eingriffausnehmungen (153) ausweisenden Arme (152) der Scheibe (150) im Bereich von in der Tragscheibe (120) vorgesehenen Ausnehmungen (136) für die Radmuttern (116) auf der Tragscheibe (120) und bei gleichzeitiger Abstützung auf schulterartigen, an den Radmuttern (116) vorgesehenen Abschnitten (263) einführbar sind.

2. Gleitschutzvorrichtung nach Anspruch 1, dadurch gekennzeichnet, daß jede Ausnehmung (136) in der Tragscheibe (120) für die Radmuttern (116) von einem kreisförmigen Abschnitt (136a) in einem gegenüber dem Durchmesser der Radmuttern (116) größeren Durchmesser und einem sich an den kreisförmigen Abschnitt (136a) anschließenden länglichen Abschnitt gebildet ist, dessen Durchmesser dem Durchmesser der Radmuttern (116) im Bereich deren Ringnuten (262) entspricht.

3. Gleitschutzvorrichtung nach Anspruch 1, dadurch gekennzeichnet, daß jede Ausnehmung (136) in der Tragscheibe (120) für die Radmuttern (116) als Langloch mit einem gegenüber dem Durchmesser der Radmuttern (116) größeren Durchmesser ausgebildet ist und daß alle Ausnehmungen in Bezug auf ihre Längsachsen radial verlaufend in der Tragscheibe (120) angeordnet sind.

4. Gleitschutzvorrichtung nach den Ansprüchen 1 bis 3, dadurch gekennzeichnet, daß die auf der Tragscheibe (120) gehaltene weitere Scheibe (150) mittels einer auf der Tragscheibe (120) angeordneten Abdeckscheibe (160) abgedeckt ist, welche eine der Anzahl der Radmuttern (116) entsprechende Anzahl von Ausnehmungen aufweist.

5. Gleitschutzvorrichtung nach den Ansprüchen 1 bis 4, dadurch gekennzeichnet, daß die Tragscheibe (120) mit den Gleitschutzarmen (140) als Ring ausgebildet ist, dessen mittige Öffnung mittels einer Grundscheibe (130) verschlossen ist, die in einer an der Ringinnenkante ausgebildeten Führung um ihre mittige Achse verdrehbar gehalten ist und die die Ausnehmungen (136) für die Radmuttern (116) aufweist.

**Claims**

1. Non-skid device for tyred, especially pneumatically tyred vehicle wheels for ice and snowy surfaces, comprising a supporting disk (120) fixed to the wheel disk or rim (11) of a vehicle wheel and having a plurality of equidistant, radially directed non-slid arms (140), which engage over the tyre tread (14) in the swung-out position and pivotable about axes parallel to the wheel axis, said arms externally carrying on their end portions engaging over the tyre tread a gripping profile or non-skid spikes (146), characterized in that each one-part, prebent non-skid arm (140) is provided in its downwardly bent area (143b) with a reinforcement (148) which increases its weight and in its defined area is kept freely pivotable on a pivot axis (141), that a further disk (150) is held on the supporting disk (120) and is provided with a device (250) locking supporting disk (120) to the wheel nuts (116), each wheel nut (116) being provided on its free end carrying the supporting disk (120) with an annular groove (262) located over the fitted supporting disk (120), that the further disk (150) is externally provided with arms (152) located in the plane formed by the annular grooves (262) of wheel nuts (116) and the number of said arms corresponds to that of the wheel nuts (116), each arm (152) being provided with a semicircular engaging recess (153) with a diameter corresponding to the diameter of the annular groove (262) of each wheel nut (116) and that on turning the disk (150), its engaging recesses (153) are inserted in the annular grooves (262) of wheel nuts (116), accompanied by the simultaneous engagement of the arms (152) or disk (150) having the engaging recesses (153) in the vicinity of recesses (136) provided in supporting disk (120) for the wheel nuts (116) and supporting disk (120) and accompanied by the simultaneous bearing on shoulder-like portions (263) provided on wheel nuts (116).

2. Non-skid device according to claim 1, characterized in that each recess (136) in the supporting disk (120) for the wheel nuts (116) is formed by a circular portion (136a) having a larger diameter than that of the wheel nuts (116) and an elongated portion connected to the circular portion (136a) and whose diameter corresponds to that of the wheel nuts (116) in the vicinity of their annular grooves (262).

3. Non-skid device according to claim 1, characterized in that each recess (136) in the supporting disk (142) for the wheel nuts (116) is constructed as an elongated slot with a larger diameter than that of the wheel nuts (116), and that with respect to their longitudinal axes, all the recesses are arranged radially in the supporting disk (120).

4. Non-skid device according to claims 1 to 3, characterized in that the further disk (150) held on supporting disk (120) is covered by means of a covering disk (160) arranged on supporting disk (120) and which has a number of recesses, corresponding to the number of wheel nuts (116).

5. Non-skid device according to claims 1 to 4, characterized in that the supporting disk (120) with non-skid arms (140) is constructed as a ring, whose central opening is closed by means of a base disk (130), which is held in a guide formed on the inner edge of the ring so as to rotate about its central axis and which has the recesses (136) for the wheel nuts (116).

**Revendications**

1. Dispositif antidérapant pour les roues de véhicules à bandage, spécialement à bandage pneumatique pour surfaces verglacées ou enneigées, comprenant un disque porteur (120) fixé au disque de roue ou à la jante (11) d'une roue de véhicule avec un certain nombre de bras antidérapants (140) disposés à distances égales l'un de l'autre, suivant radialement et étant orientables autour des axes qui vont en parallèle par rapport à l'axe de roue, bras antidérapants recouvrant la bande d'usure d'une roue (14) en position pivotée et portant un profil de crochet ou des pointes antidérapantes (146) disposées à l'extérieur des sections finales qui recouvrent la bande d'usure de la roue, caractérisé en ce que chaque bras antidérapant réalisé en une partie et précoudé (140) est muni en sa zone coudée (143b) d'un renforcement (148) élevant son poids (148) et tenu à un pivot (141) de façon à pivoter librement dans une zone délimitée, qu'un autre disque (150) est tenu au disque porteur (120) étant muni d'un dispositif (250) verrouillant le disque porteur (120) avec les écrous de fixation de roue (116) dont chacun sur son bout libre portant le disque porteur (120) est muni d'une rainure pour anneau de retenue (262) au-dessus du disque porteur (120) surmonté, que l'extérieur de l'autre disque (150) est muni de bras (152) logés dans le plan qui est formé par les rainures (262) pour anneau de retenue des écrous de fixation de roue (116), bras dont le nombre correspond au nombre des écrous de fixation de roue (116) chacun de ces bras (152) étant muni d'un creux d'engrènement (153) demi-circulaire d'un diamètre correspondant au diamètre de la rainure pour anneau de retenue (262) de chaque écrou de fixation de roue (116), et qu'en pivotant du disque (150) les creux d'engrènement (153) de celui-ci peuvent être introduits dans les rainures pour anneau de retenue (262) des écrous de fixation de roue (116) par contact simultané des bras (152) munis de creux d'engrènement (153) du disque (150) à la zone des creux (136) prévus dans le disque porteur (120) pour les écrous de fixation de roue (116) sur le disque porteur (120) et par l'appui simultané sur des sections (263) en forme d'épaulement prévues aux écrous de fixation de roue (116).

2. Dispositif antidérapant suivant la revendication 1, caractérisé en ce que chaque creux d'engrènement (136) dans le disque porteur (120) pour les écrous de fixation de roue (116) est formé par une section circulaire (136a) d'un diamètre plus grand par rapport au diamètre des écrous de fixation de roue (116) et par une section longitudinale adjacent à la section circulaire (136a), dont le diamètre correspond au diamètre de l'écrou de fixation de roue (116) à la zone de ses rainures pour anneau de retenue (262).

3. Dispositif antidérapant suivant la revendication 1, caractérisé en ce que chaque creux (136) dans le disque porteur (120) pour les écrous de fixation de roue (116) est réalisé en tant que trou longitudinal d'un diamètre plus grand par rapport à celui des écrous de fixation de roue (116) et que tous les creux sont disposés dans le disque porteur (120) de façon à aller radialement par rapport à ses axes longitudinaux.

4. Dispositif antidérapant suivant les revendications 1 à 3, caractérisé en ce que l'autre disque (150) tenu sur le disque porteur (120) est couvert par l'intermédiaire d'un disque de couverture (160) disposé sur le disque porteur (120), disque de couverture ayant un nombre de creux correspondant au nombre des écrous de fixation de roue (116).

5. Dispositif antidérapant suivant les revendications 1 à 4, caractérisé en ce que le disque porteur (120) avec les bras antidérapants (140) est réalisé en tant qu'anneau dont l'orifice central est fermé par l'intermédiaire d'un disque de base (130) qui est tenu de façon à pivoter autour de son axe central dans un guidage se trouvant à la surface intérieure de l'anneau et muni des creux (136) pour les écrous de fixation de roue (116).

FIG. 1

100

140 120 121 141 130 147 150 160 140

FIG.2

FIG. 3

FIG. 4

**0 056 130**

FIG. 5

FIG. 6

FIG. 7

FIG. 8

FIG. 10

FIG. 9

*FIG.11*

FIG.12

FIG.13